Europäisches Patentamt

European Patent Office

Office européen des brevets

(11) Veröffentlichungsnummer: **0 416 276 A1**

# EUROPÄISCHE PATENTANMELDUNG

(21) Anmeldenummer: **90114541.7**

(22) Anmeldetag: **28.07.90**

(51) Int. Cl.5: **B01J 19/30**, B01D 3/22

(30) Priorität: **07.09.89 DE 3929772**

(43) Veröffentlichungstag der Anmeldung:
**13.03.91 Patentblatt 91/11**

(84) Benannte Vertragsstaaten:
**AT BE CH DE ES FR GB GR IT LI LU NL SE**

(71) Anmelder: **DIDIER-WERKE AG**
**Lessingstrasse 16-18**
**W-6200 Wiesbaden(DE)**

(72) Erfinder: **Dekreon, Hans**
**Robergstrasse 5**
**W-5463 Unkel(DE)**

(74) Vertreter: **Brückner, Raimund, Dipl.-Ing.**
**c/o Didier-Werke AG Lessingstrasse 16-18**
**W-6200 Wiesbaden(DE)**

(54) Roststein für Tragroste eines Füllkörperturms.

(57) Die Erfindung bezieht sich auf einen Roststein für Tragroste zur Auflagerung der Füllkörperschicht in einem Füllkörperturm, bei welchen die Roststeine in konzentrischen Ringreihen unter Bildung eines im wesentlichen kugelabschnittförmigen Bogengewölbes mit ihren Längsstegen radial angeordnet sind und sich dadurch kennzeichnen, daß zum Zwecke der Verringerung bzw. Beseitigung der Randläufigkeit die Oberseite der Längsstege oberflächenstrukturiert ist.

Fig. 1

EP 0 416 276 A1

## ROSTSTEIN FÜR TRAGROSTE EINES FÜLLKÖRPERTURMS

Die Erfindung bezieht sich auf einen Roststein für Tragroste zur Auf lagerung der Füllkörperschicht in einem Füllkörperturm, bei welchen die Roststeine in konzentrischen Reihen unter Bildung eines im wesentlichen kugelabschnittförmigen Bogengewölbes mit ihren Längsstegen im wesentlichen radial angeordnet sind.

Derartige Roststeine sind beispielsweise aus der DE-AS 16 84 971 oder der DE-PS 23 22 393 bekannt. Die Roststeine können dabei in Draufsicht z.B. ein T- oder I-Profil haben. Das Tragrostsystem, bestehend aus Roststeinen und Kitt, muß genügend Festigkeit besitzen, um das Gewicht der Füllkörperschicht zu tragen. Andererseits müssen die Tragroste einen möglichst großen, freien Querschnitt besitzen. Ferner ist erwünscht, daß die Tragroste eine Oberfläche haben, dergestalt, daß diese eine gute Flüssigkeitsverteilung aufrechterhalten oder erzeugen kann und daß die durch die Füllkörperschüttung über dem Tragrost erzeugte Stoffaustauschfläche (Gas/Flüssigkeit) durch den Tragrost nicht gestört wird. Die Ausbildung des Tragrosts als kugelabschnittförmiges Bogengewölbe dient der Erhöhung der Tragfähigkeit. Während mit ebenen Rostsystemen nur kleine Turmdurchmesser ausgestattet werden können, verlangt die Lastabtragung aus der Füllkörperschüttung bei größeren und großen Turmdurchmessern eine gewölbeförmige Ausbildung des Rostes, im Idealfall einer Stützlinie folgend. Die bekannten gekrümmten Oberflächen des Tragrostes führen jedoch zu einer unerwünschten Randläufigkeit der aus der Füllkörperschicht niedergeschlagenen Flüssigkeit, so daß unerwünscht hohe Anteile der Flüssigkeit ohne weitere Austauschfunktion unterhalb des Tragrostes an der Turmwandung abfließen.

Aufgabe der vorliegenden Erfindung ist es, einen Roststein für Tragroste der gattungsgemäßen Art vorzuschlagen, mit welchem die zuvor geschilderten Nachteile vermieden werden und insbesondere Flüssigkeit weitgehend gleichmäßig über den Turmquerschnitt verteilt durch den Reaktionsraum unterhalb des Tragrostes frei abgeleitet wird, wo sie im Gasaufstrom fein verteilt abregnet.

Diese Aufgabe wird erfindungsgemäß im wesentlichen dadurch gelöst, daß die Oberseite der Längsstege oberflächenstrukturiert ist. Dadurch, daß die oberen Steinflächen der Roststeine mit Aus- bzw. Einformungen versehen sind, wird mit einfachen Mitteln der unerwünschten Randläufigkeit von Tragrosten der gattungsgemäßen Art wirksam begegnet. Dadurch wird bei einfacher Fertigungstechnik die Reaktionskapazität in dem Raum unterhalb des Tragrostes erheblich gesteigert.

Die Oberflächenstrukturierung auf der Oberseite der Längssteige kann beispielsweise durch Rillen, Rippen, Wellen, Noppen, Einbuchtungen, Krümmungen, Abschrägungen oder dergleichen Formgebungen gebildet sein.

Dabei verlaufen die Rillen, Rippen, Wellen und dergleichen Formgebungen vorzugsweise quer zur Längsrichtung der Längsstege.

Es ist gegebenenfalls auch möglich, die Oberflächenstrukturierung durch eine im Querschnitt des Längssteges dach- oder gewölbeartige Form zu bilden. Dabei verläuft also der Scheitel der dach- oder gewölbeartigen Form parallel zur Längsrichtung des Längssteges.

Wird die Oberflächenstrukturierung durch Noppen gebildet, so nehmen diese vorzugsweise die gesamte Breite des Längssteges ein, um der Randläuf igkeit am wirksamsten zu begegnen.

Von Vorteil kann es auch sein, wenn die Rillen, Rippen, Wellen oder dergleichen langgestreckte Formgebungen eines Längssteges im Winkel zueinander verlaufen, um so die Flüssigkeit in unterschiedliche Richtungen aus der Radialrichtung abzulenken.

Ebenso kann vorgesehen sein, daß die Rillen, Rippen, Wellen oder dergleichen Formgebungen in sich abgewinkelt oder gekrümmt sind.

Gemäß einem weiteren Erfindungsmerkmal ist vorgesehen, daß die Rillen, Rippen, Wellen oder dergleichen Formgebungen von einer Stegseite zur anderen Stegseite hin, vorzugsweise in ihrer Richtung wechselnd, schräg abfallen, um eine noch bessere Vergleichmäßigung des Abregnens der Flüssigkeit von dem Tragrost zu gewährleisten.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Figur 1 einen Ausschnitt aus einem Tragrost herkömmlicher Bauart, jedoch mit neuen Roststeinen nach der Erfindung, in Draufsicht;

Figur 2 den Tragrost im Querschnitt II von Figur 1, und

Figur 3 bis 5 verschiedene Ausführungsformen eines erfindungsgemäßen Roststeins, jeweils in Schrägansicht und in vergrößertem Maßstab.

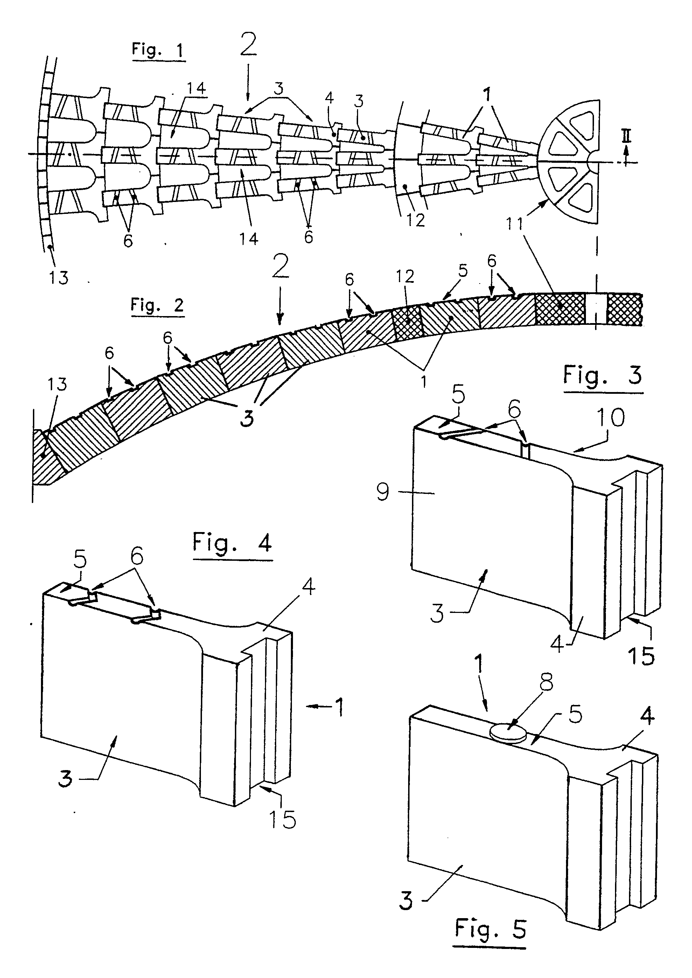

Der Tragrost 2 gemäß Figuren 1 und 2 dient der Auflagerung der Füllkörperschicht in einem Füllkörperturm. Er besteht im wesentlichen aus Roststeinen 1, welche in konzentrischen Ringreihen unter Bildung eines im wesentlichen kugelabschnittförmigen Bogengewölbes mit ihren Längsstegen 3 unter Freilassung von radialen Langlöchern 14 radial angeordnet sind. Die äußerste Ringreihe der Roststeine 1 stützt sich an einem äußeren Kämpferring 13 ab, während die Mitte des Tragrostes 2 von einem ein- oder mehrteiligen durchbrochenen, kreisförmigen Mittelstein 11 gebildet ist. Zwischen den Ringreihen kann erforderlichenfalls ein Massivring 12 angeordnet sein. Die in Figur 1 dargestellten Roststeine 1 haben in Draufsicht im wesentlichen ein T-Profil, wobei der Quersteg 4 des Roststeins 1 stirnseitig mit einer Nut 15 ausgestattet ist, dessen Breite gerade der Stärke des Längssteges 3 des angrenzenden Roststeins 1 entspricht, welcher dadurch mit seinen freien Enden in die Nut 15 eingreifen kann. Hierdurch entsteht eine Art Verbund.

Während die Roststeine 1 nach dem Stande der Technik auf ihrer Oberseite eben sind, ist die Oberseite 5 der Längsstege 3 bei den erfindungsgemäß verwendeten Roststeinen 1 oberflächenstrukturiert, und zwar bei den in den Figuren 1 und 2 verwendeten Roststeinen 1 entsprechend der Ausführungsform in Figur 3 mit zwei im Winkel zueinander verlaufenden Rillen 6, welche die gesamte Oberseite 5 des Längssteges 3 durchqueren und in entgegengesetzten Richtungen, d.h. die eine Rille 6 zur Stegseite 9 und die andere Rille 6 zur gegenüberliegenden Stegseite 10 hin, abfallen.

Bei der Ausführungsform gemäß Figur 4 sind in der Oberseite 5 des Längssteges 3 wiederum Rillen 6 vorgesehen, deren Rillengrund jedoch in diesem Fall parallel zur Oberseite 5 verläuft. Die Rillen 6 sind in sich V-förmig abgewinkelt, wobei der Scheitel des Winkels zum Quersteg 4 hin weist.

Figur 5 veranschaulicht eine Ausführungsform des erfindungsgemäßen Roststeins 1, bei welcher auf der Oberseite 5 des Längssteges 3 ein Noppen 8 vorgesehen ist, welcher die gesamte Breite der Oberseite 5 des Längssteges 3 einnimmt.

Ersichtlich läßt sich die Oberflächenstrukturierung im Rahmen des Erfindungsgedankens noch durch eine Vielzahl anderer Formgebungen realisieren.

## Ansprüche

1. Roststein für Tragroste (2) zur Auflagerung der Füllkörperschicht in einem Füllkörperturm, bei welchen die Roststeine (1) in konzentrischen Reihen unter Bildung eines im wesentlichen kugelabschnittförmigen Bogengewölbes mit ihren Längsstegen (3) im wesentlichen radial angeordnet sind, dadurch gekennzeichnet,

daß die Oberseite (5) der Längsstege (3) oberflächenstrukturiert ist.

2. Roststein nach Anspruch 1, dadurch gekennzeichnet,

daß die Oberflächenstrukturierung durch Rillen (6), Rippen, Wellen, Noppen (8), Einbuchtungen, Krümmungen, Abschrägungen oder dergleichen Formgebungen gebildet ist.

3. Roststein nach Anspruch 2, dadurch gekennzeichnet,

daß die Rillen (6), Rippen, Wellen und dergleichen Formgebungen quer zur Längsrichtung des Längssteges (3) verlaufen.

4. Roststein nach Anspruch 2, dadurch gekennzeichnet,

daß der oder die Noppen (8) die gesamte Breite des Längssteges (3) einnimmt bzw. einnehmen.

5. Roststein nach Anspruch 2 oder 3, dadurch gekennzeichnet,

daß die Rillen (6), Rippen, Wellen oder dergleichen Formgebungen eines Längssteges (3) im Winkel zueinander verlaufen.

6. Roststein nach einem der Ansprüche 2 bis 5, dadurch gekennzeichnet,

daß die Rillen (6), Rippen, Wellen oder dergleichen Formgebungen in sich abgewinkelt oder gekrümmt sind.

7. Roststein nach einem der Ansprüche 2 bis 6, dadurch gekennzeichnet,

daß die Rillen (6), Rippen, Wellen oder dergleichen Formgebungen von einer Stegseite (9) zur anderen Stegseite (10) hin, vorzugsweise in ihrer Richtung wechselnd, schräg abfallen.

Fig. 1

Fig. 2

Fig. 3

Fig. 4

Fig. 5

Europäisches
Patentamt

EUROPÄISCHER
RECHERCHENBERICHT

Nummer der Anmeldung

EP 90 11 4541

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2 322 393  (DIDIER-WERKE) <br> * Vollständiges Dokument * <br> – – – – – | 1 | B 01 J 19/30 <br> B 01 D 3/22 |
| | | | **RECHERCHIERTE SACHGEBIETE (Int. Cl.5)** |
| | | | B 01 J <br> B 01 D |

Der vorliegende Recherchenbericht wurde für alle Patentansprüche erstellt

| Recherchenort | Abschlußdatum der Recherche | Prüfer |
|---|---|---|
| Den Haag | 19 November 90 | BOGAERTS M.L.M. |